# EUROPÄISCHE PATENTSCHRIFT

(11) **EP 4 031 790 B1**
(45) Veröffentlichungstag und Bekanntmachung des Hinweises auf die Patenterteilung: **01.03.2023**
(21) Anmeldenummer: 20772012.9
(22) Anmeldetag: 09.09.2020
(51) Int. Cl.: F16L 3/01, B65H 75/34, H02G 11/02, H01R 35/02

(54) **DREHFÜHRUNG FÜR EINE ODER MEHRERE LEITUNGEN**
ROTARY GUIDE FOR ONE OR MORE LINES
GUIDAGE ROTATIF POUR UNE OU PLUSIEURS LIGNES

(30) Priorität: 16.09.2019 DE 202019105125 U
(43) Veröffentlichungstag der Anmeldung: 27.07.2022
(73) Patentinhaber: Igus GmbH, 51147 Köln (DE)
(72) Erfinder: THEISS, Georg, 50678 Köln (DE)
(74) Vertreter: Lippert Stachow Patentanwälte Rechtsanwälte
(86) Internationale Anmeldenummer: PCT/EP2020/075192
(87) Internationale Veröffentlichungsnummer: WO 2021/052833

(56) Entgegenhaltungen:
- WO-A1-2017/182583
- DE-A1- 3 008 544
- DE-A1-102006 009 167
- DE-U1-202011 103 263

## Beschreibung

Die Erfindung betrifft allgemein eine Drehführung für mindestens eine Leitung oder mehrere Leitungen, die zwischen zwei relativ zueinander um einen vorgegebenen bzw. begrenzten Drehwinkel drehbaren Punkten geführt werden soll bzw. sollen, insbesondere zwischen Endpunkten eines in der Drehführung aufgenommenen Leitungsabschnitts.

Endlos drehbare Drehführungen sind aus der Hydraulik und Pneumatik bekannt. Für elektrische Leistung oder Signale sind z.B. Schleifringe bzw. Schleifkontakte zur endlosen Drehübertragung hinlänglich bekannt. In beiden Fällen ist eine Unterbrechung der Leitung zwingend erforderlich, um die Schnittstellen beidseitig an die Drehführung bzw. den Schleifring anzuschließen.

Für viele Anwendungen, wie bspw. für Leitungen für Datenübertragung oder aber für Leitungen bzw. Leitungsführungsvorrichtungen bzw. Energieführungsketten, die ihrerseits mehrere Kabel und Schläuche führen, sind Durchführungen mit Schleifkontakten jedoch nicht geeignet bzw. unerwünscht, da insbesondere die Übertragungsqualität einer Datenleitung durch Schnittstellen wie Schleifringe und dgl. verschlechtert wird. Auch für andere Anwendungen, z.B. Übertragung von hydraulischen oder pneumatischen Betriebsmedien durch Schläuche sind Schnittstellen wie z.B. Drehkopplungen mit konstruktiven und qualitativen Nachteilen behaftet.

Die Erfindung betrifft daher speziell eine unterbrechungsfreie, aber drehwinkelbegrenzte Drehführung für mindestens eine flexible Leitung bzw. Leitungsführungsvorrichtung, d.h. eine Drehführung, die einen begrenzten Drehwinkel ohne Unterbrechung der Leitung(en) ermöglicht.

Solche gattungsgemäßen Drehführungen umfassen typisch zwei um eine gemeinsame Drehachse relativ zueinander, insbesondere um einen vorgegebenen bzw. begrenzten Drehwinkel, drehbar gelagerte Aufnahmeteile, bspw. Gehäuseteile, zur Aufnahme von jeweils einem von zwei um die gemeinsame Drehachse gegensinnig, d.h. mit einem relativ zueinander entgegengesetzten Drehsinn aufzuwickelnden Teilabschnitten eines in der Drehführung aufnehmbaren Leitungsabschnitts, und eine Umlenkeinheit zum Stützen eines Umlenkbereichs. Mit dem Umlenkbereich wird insbesondere ein variabler bzw. beweglicher Teilbereich der Leitung bezeichnet, in dem wie in einem Wendebereich die zu führende Leitung zwischen den gegensinnig aufzuwickelnden Teilabschnitten umschlagbar ist, sodass der in der Drehführung aufnehmbare Leitungsabschnitt bei Relativdrehung der Aufnahmeteile um die gemeinsame Drehachse von einem Aufnahmeteil in das andere Aufnahmeteil umgelenkt werden kann.

Für flexible elektrische Flachkabel bzw. Flachbandkabel ist eine derartige, gattungsgemäße Drehführung aus der Patentschrift DE 40 04 233 A1 bekannt. Diese drehwinkelbegrenzte Drehführung hat ein Gehäuse mit zwei um eine Drehachse relativ zueinander drehbaren Gehäuseteilen. Das Gehäuse definiert einen in Bezug auf die Drehachse im Wesentlichen zylindrischen Aufnahmeraum für einen ununterbrochenen Verlauf des Flachkabels mit zwei um die Drehachse helixförmig d.h. schraubenartig bzw. korkenzieherartig aufgewickelten Kabelabschnitten mit jeweils mehreren Wicklungen und einem diese Kabelabschnitte verbindenden Umlenkbereich bzw. U-förmigen Wendebereich. Dieser ist um die Drehachse gekrümmt sowie um eine dazu senkrechte Umlenkachse, im Wesentlichen U-förmig gebogen, sodass sich je nach Drehwinkelstellung der eine schraubenartig abgelegte Kabelabschnitt verlängert und der andere schraubenartig abgelegte Kabelabschnitt verkürzt.

Nachteilig bei dieser Drehdurchführung ist u.a., dass mehrere Kabelwicklungen übereinander abgelegt werden und daher reibungsbedingt Verschleiß bzw. Widerstand entsteht. Zudem wird ausreichend axialer Bauraum benötigt und der Aufbau ist vergleichsweise komplex.

Eine weitere Drehführung für eine unterbrechungsfreie Führung mindestens einer Leitung ist aus der DE 20 2016 105 507 U1 bekannt. Diese Drehführung umfasst zwei um eine Drehachse relativ zueinander drehbare Gehäuseteile zur Aufnahme jeweils eines von zwei um die Drehachse gegensinnig gekrümmten Leitungsabschnitts. Die Gehäuseteile sind im Wesentlichen hohlzylindrisch bzw. topfartig ausgebildet, wobei der Radius der äußeren Gehäusewandung die Krümmung des aufgenommenen Leitungsabschnitts vorgibt.

Die Drehführung nach der DE 20 2016 105 507 U1 hat einen vereinfachten Aufbau, erlaubt zudem die Führung mehrere Leitungen z.B. in einem Wellschlauch und dgl., dies jedoch nur über einen relativ begrenzten Drehwinkel von typisch 360°, maximal 540°.

Eine weitere Drehführung, die größere Drehwinkel erlaubt, ist aus der WO 2017/182583 A1 bekannt. Hier ist die Leitung bzw. Leitungsführungsvorrichtung schraubenartig in mehreren ersten Wendellagen und mehreren zweiten Wendellagen, gegensinnig zum Drehsinn der ersten Wendellagen um eine Drehwelle gewunden. Diese Drehführung weist eine beachtliche axiale Längserstreckung auf, um mehrere Wicklungen der Leitung aufnehmen zu können und um größere Drehwinkel zu erzielen. Die Wicklungen der Leitung werden an einer drehentkoppelten zylindrischen Hülse gestützt, die sich in die axiale Richtung erstreckt. Nebst dem grundsätzlich mit der axialen Baugröße skalierbaren Drehwinkel besteht ein wesentlicher Vorteil der Drehführung gemäß WO 2017/182583 A1 besteht darin, dass grundsätzlich beliebige und auch mehrere unterschiedliche Leitungen unterbrechungsfrei und geschützt von einem Punkt zu einem dazu relativdrehbaren Punkt durchgeführt werden können.

In vielen Anwendungen sind jedoch flachbauende Drehführungen erwünscht mit geringer Abmessung axial entlang der Drehachse erwünscht.

Eine erste Aufgabe der vorliegenden Erfindung liegt mithin darin, eine gattungsgemäße unterbrechungsfreie, drehwinkelbegrenzte Drehführung vorzuschlagen, die Drehwinkelgrößer als 540°, insbesondere größer als 1000°, erlaubt und bei welcher die axiale Abmessung möglichst geringgehalten wird. Die Reibung verschiedener Leitungsabschnitte aneinander soll dabei ebenfalls möglichst gering sein.

Diese Aufgabe wird gelöst durch eine Drehführung mit den Merkmalen nach Anspruch 1. Vorteilhafte Ausführungsformen sind Gegenstand der abhängigen Ansprüche. Eine weitere unabhängige Aufgabe besteht darin, einen vereinfachten Aufbau vorzuschlagen, welcher insbesondere nachträgliches, einfaches Einlegen unterschiedlicher, anwendungsabhängiger Leitungen durch den Endnutzer selbst ermöglicht.

Erfindungsgemäß wird bei einer Drehführung gemäß dem Oberbegriff aus Anspruch 1 vorgeschlagen, dass jedes der beiden Aufnahmeteile eine spiralförmige Aufnahmenut mit einer Mehrzahl um die gemeinsame Drehachse und von einem Anfangsradius zu einem Endradius verlaufenden Windungen zum zumindest teilweisen Aufnehmen eines Leitungsabschnitts in der Aufnahmenut aufweist, wobei die Windungen, vorzugsweise alle Windungen, der Aufnahmenut beider Aufnahmeteile jeweils in einer durch das jeweilige Aufnahmeteil vorgegebenen Ebene senkrecht zur gemeinsamen Drehachse verlaufen. Die räumliche Formgebung der Aufnahmenuten kann dabei insbesondere jeweils einer ebenen Spirale entsprechen.

Erfindungsgemäß weist die Umlenkeinheit dabei mindestens eine zwischen dem Anfangsradius und dem Endradius bzgl. der gemeinsamen Drehachse radial erstreckte oder radial verstellbare Wirkfläche auf, welche mit den Aufnahmenuten der Aufnahmeteile zusammenwirkt um bei Relativdrehung der Aufnahmeteile um die gemeinsame Drehachse den Leitungsabschnitt der zu führenden Leitung/en aus der Aufnahmenut des einen Aufnahmeteils in die Aufnahmenut des anderen Aufnahmeteils umzuwickeln.

Ein in der Drehführung aufzunehmender Leitungsabschnitt einer zu führenden Leitung bzw. Leitungsführungsvorrichtung kann in axialer Richtung bzw. in Richtung der Tiefe der Aufnahmenut vollständig oder nur teilweise in der Aufnahmenut aufgenommen sein. Bei einem teilweisen Aufnehmen kann eine Tiefe der Aufnahmenut bzw. die Abmessung der Aufnahmenut in axialer Richtung kleiner sein als der Durchmesser der Leitung bzw. Leitungsführungsvorrichtung innerhalb des Leitungsabschnitts, sodass - in einer Schnittebene parallel zur Drehachse gesehen - der betrachtete Leitungsabschnitt aus der Aufnahmenut teilweise hervorstehen kann. Bevorzugt wird ein vollständiges Aufnehmen der Leitung(en) in den Aufnahmenuten. Die Tiefe der Aufnahmenut ist jedenfalls vorzugsweise in allen Windungen gleich.

Die spiralige Form der Aufnahmenut ist erfindungsgemäß somit nicht helixartig, schraubenförmig bzw. korkenzieherartig. Vielmehr wird eine Nut vorgeschlagen, die in einer Ebene senkrecht zur Drehachse der Drehführung verläuft, insbesondere ausschließlich in Art einer ebenen Spirale.

Die Windungen der spiralförmigen Aufnahmenut gemäß der Erfindung verlaufen somit um die Drehachse in einer Ebene von einem kleinsten Anfangsradius, dem Radius der Spirale am Anfangspunkt der Aufnahmenut, zu einem größten Endradius, dem Radius der Spirale am Endpunkt der Aufnahmenut, wobei - z.B. in Polarkoordinaten betrachtet - der Radius r der Windungen mit dem Winkelmaß des Polarwinkels, zunimmt insbesondere stetig wächst. Diese Erklärung ist im mathematischen Sinne zu verstehen.

Alle Windungen der Aufnahmenut schneiden vorzugsweise eine Ebene die senkrecht zur Drehachse verläuft.

Die Wirkfläche gemäß der Erfindung kann sich in radiale Richtung bzgl. der Drehachse der Drehführung erstrecken. Sie kann z.B. zumindest zum Teil durch eine bogenförmige Fläche an der Umlenkeinheit gebildet sein, deren Krümmungsachse in die radiale Richtung verläuft. Die Wirkfläche kann mehrere separate Abschnitte umfassen, die nicht zwingend eine zusammenhängende Fläche im geometrischen Sinne bilden müssen.

Die Wirkfläche kann alternativ oder ergänzend auch radial verstellbar bzw. verschieblich sein. Die Wirkfläche kann bspw. durch die Oberfläche einer Rolle gebildet werden, die drehbar um eine Rollenachse ist, die radial zur Drehachse der Drehführung verläuft, wobei die Rolle entlang dieser Rollenachse in radiale Richtung verstellbar gelagert sein kann. In diesem Fall kann die Oberfläche der Rolle auch eine zusammenhängende Wirkfläche bilden, z.B. einer inneren Hälfte einer Torusfläche entsprechen.

Ein Vorteil der erfindungsgemäßen Lösung liegt darin, dass die Drehführung besonders flach bauend ausgeführt werden kann, mit einer besonders geringen axialen Gesamtabmessung und dennoch großem Drehwinkel.

Ein Teil bzw. Anschlusspunkt der Leitung an einer ersten Seite der Drehführung kann insbesondere um mehrere vollständige Umdrehungen gegenüber einem weiteren Teil bzw. Anschlusspunkt der Leitung an der zweiten Seite der Drehführung gedreht werden, ohne dass die Leitung in der Drehführung unterbrochen wird oder beschädigt wird und ohne die axiale Abmessung zu erhöhen.

Der in der Drehführung aufnehmbare Leitungsabschnitt der Leitung/en bzw. der Leitungsführungsvorrichtung wird während des Drehens aus der Aufnahmenut des einen Aufnahmeteils in die Aufnahmenut des anderen Aufnahmeteils durch die Umlenkeinheit leitungsschonend umgelegt, wobei verschiedene Längsbereiche des Leitungsabschnitts nicht aneinanderreiben. Die Aufnahmenut schützt den aufgenommenen Leitungsabschnitt vor Reibung der Oberfläche eines Längsbereichs an der Oberfläche eines anderen Längsbereichs des Leitungsabschnitts.

Die gegensinnig aufzuwickelnden Teilabschnitte eines aufnehmbaren Leitungsabschnitts sind jeweils in einem Aufnahmeteil aufnehmbar, und der Umlenkbereich zwischen den Teilabschnitten ist durch die Umlenkeinheit stützbar.

Die Wirkfläche der Umlenkeinheit wirkt mit den Aufnahmeteilen zusammen, um den Leitungsabschnitt der Leitung/en bzw. der Leitungsführungsvorrichtung aus einer flachen spiralförmigen Aufnahmenut in die andere flache spiralförmige Aufnahmenut umzulegen. Die geführte Leitung kann dabei aus einer Windung der einen Aufnahmenut in die entsprechende Windung der anderen Aufnahmenut, die den gleichen radialen Abstand zur Drehachse hat, umgelegt werden.

Der radiale Abstand des Umlenkbereichs von der Drehachse kann dabei zwischen dem Anfangsradius und dem Endradius der spiralförmigen Aufnahmenut variieren, insbesondere stufenlos mit dem relativen Drehwinkel verändern. Da mindestens eine Wirkfläche der Umlenkeinheit sich zwischen dem Anfangsradius und dem Endradius der Spirale radial erstreckt oder radial verstellt werden kann, kann die Wirkfläche mit den Aufnahmenuten in verschiedenen Radialbereichen bzw. an verschiedenen Windungen zusammenwirken, ggf. auch um das gezielte Positionieren der Leitung/en bzw. Leitungsführungsvorrichtung in diese Windung der Aufnahmenut zu bewirken. Vorteilhaft dabei ist, dass auch eine Vielzahl Windungen und entsprechend größere Drehwinkel ohne Verheddern der Leitung/en realisierbar sind.

Die erfindungsgemäße Drehführung ist zum Führen sowohl von nur einer Leitung, oder auch von mehreren Leitungen geeignet. Zur Führung mehrerer Leitungen wird vorzugsweise eine diese aufnehmende Leitungsführungsvorrichtung verwendet, wie bspw. ein flexibler Schutzschlauch, eine räumlich auslenkbare Energieführungskette oder dgl.

Eine Leitung kann ihrerseits wiederum eine oder mehrere Stränge umfassen, bspw. ein oder mehrere elektrische Kabel, in eimem gemeinsamen flexiblen Mantel oder dgl.

Die Erfindung nicht auf elektrische Versorgungsleitungen beschränkt, sondern erlaubt auch die drehbare, unterbrechungsfreie Durchführung von Medienleitungen wie z.B. pneumatischen oder hydraulischen Schläuchen. Auch Kombinationen von elektrischen Versorungskabeln und Medienschläuchen können geführt werden. Hierzu ist die Verwendung einer geeigneten Leitungsführung wie z.B. einer räumlich auslenkbaren Energieführungskette besonders vorteilhaft.

Die erfindungsgemäße Drehführung kann vergleichsweise einfach durch einen Anwender mit der bzw. den Leitungen bzw. der Leitungsführungsvorrichtung bestückt bzw. ausgerüstet werden, da die Leitung(en) bzw. Leitungsführungsvorrichtung in einfacher Weise in die ebenen axial zugänglichen Aufnahmenuten der Aufnahmeteile eingelegt und an der bzw. um die Umlenkeinheit angebracht werden können.

Der in der Drehführung aufnehmbare Leitungsabschnitt ist dabei vorzugsweise in seiner Leitungslängsrichtung festgelegt. Der Leitungsabschnitt kann vorzugsweise an einem Endpunkt im jeweiligen Aufnahmeteil in Leitungslängsrichtung arretiert bzw. festgelegt sein.

Die Umlenkeinheit kann zwischen den Aufnahmeteilen drehbar angeordnet sein. Eines von beiden Aufnahmeteilen kann vorzugsweise anhand der Umlenkeinheit am anderen Aufnahmeteil relativdrehbar gelagert sein.

Ein weiterer Vorteil liegt darin, dass der in der Drehführung aufgenommene Leitungsabschnitt vor Zugbeanspruchung geschützt wird, da bei Drehung der in Umfangsrichtung bewegte Umlenkbereich in jeder Position durch die mitdrehende Umlenkeinheit unterstützt werden kann.

Die Umlenkeinheit kann insbesondere auch als axialer Abstandhalter für die zueinander relativdrehbaren Aufnahmeteile dienen.

Der minimale axiale Abstand der Aufnahmeteile voneinander kann insbesondere einem Zweifachen eines Mindestradius des Umlenkbereichs bzw. eines minimalen noch zulässigen Biegeradius der zuführenden Leitung bzw. Leitungsführungsvorrichtung entsprechen.

Die Umlenkeinheit kann zur Drehlagerung einen Drehbolzen und die Aufnahmeteile jeweils eine passende zur Drehachse koaxiale Drehöffnung aufweisen. Auch eine umgekehrt ausgestaltete Lagerung ist möglich. Die Aufnahmeteile und die Umlenkeinheit können auch jeweils Drehöffnungen aufweisen und an einer separat ausgeführten Welle oder dgl. drehbar gelagert sein.

Die Umlenkeinheit kann insbesondere die Leitung/en im Umlenkbereich beim Umschlagen zwischen den zwei gegensinnig aufzuwickelnden Teilabschnitten abstützen, bspw. um ein Knicken oder ein Überbiegen der Leitung/en zu vermeiden, sodass bei einer Biegung der geführten Leitung/en im Umlenkbereich der minimale noch zulässige Biegeradius bzw. Krümmungsradius nicht unterschritten wird.

Die Umlenkeinheit kann insbesondere eine Umlenkführung aufweisen, zum Führen des Leitungsabschnitts über den Umlenkbereich in die Aufnahmenut des anderen Aufnahmeteils. Die Umlenkführung kann dabei vorzugsweise zumindest einen Teil der Wirkfläche umfassen bzw. bereitstellen, welche bei Relativdrehung der Aufnahmeteile mit den Aufnahmenuten der Aufnahmeteile zusammenwirkt, um den Leitungsabschnitt aus der Aufnahmenut des einen in die Aufnahmenut des anderen Aufnahmeteils umzuwickeln.

Die Umlenkführung kann einem unerwünschten Auswickeln des Leitungsabschnitts aus der Drehführung entgegenwirken, bspw. wenn der Leitungsabschnitt aus einem drehenden Aufnahmeteil in ein ruhendes bzw. stillstehendes Aufnahmeteil umgewickelt wird. In einer bevorzugten Ausführungsform ist dazu die Umlenkeinheit tellerartig, mit zwei insbesondere im Wesentlichen planebenen Seiten ausgeführt, wobei jede der Seiten in einem zusammengebauten bzw. betriebsbereiten Zustand der Drehführung jeweils einer Aufnahmenut eines der Aufnahmeteile zugewandt ist, und vorzugsweise mit einer entsprechenden Gegenfläche des Aufnahmeteils bündig abschließt, um die Aufnahmenut abzudecken und/oder axial zu begrenzen. Die Umlenkeinheit kann somit zusammen mit der zugewandten Fläche des Aufnahmeteils einem ungewollten Austreten des Leitungsabschnitts aus der Aufnahmenut entgegenwirken. Diese Formgebung der Umlenkeinheit ist zudem besonders vorteilhaft für eine vorgegebene Zwangsführung des Leitungsabschnitts aus dem Umlenkbereich in eine der Aufnahmenuten.

Die Umlenkführung kann vorzugsweise durch Grenzflächen eines Führungsschlitzes in der Umlenkeinheit mit einer radialen und einer axialen Erstreckung ausgebildet sein. Insbesondere kann sich der Führungsschlitz in axiale Richtung von einer zu der anderen planebenen Seite der Umlenkeinheit erstrecken. Der Führungsschlitz kann sich vorzugsweise von einem Rand der Umlenkeinheit radial in Richtung der Drehachse erstrecken, sodass der Führungsschlitz sich zumindest bis zum Punkt erstreckt, dessen Abstand zur Drehachse dem Anfangsradius der innersten Windung der Aufnahmenut eines der Aufnahmeteile in etwa entspricht. Der Führungsschlitz sollte vorzugsweise eine Breite aufweisen, die zumindest geringfügig größer ist als der Durchmesser der zu führenden Leitung. Auch wenn eine oder eine Mehrzahl Leitungen in einer Leitungsführungsvorrichtung aufgenommen ist oder in ein Bündel gebunden ist und mit der Leitungsführungsvorrichtung bzw. als Bündel in der Drehführung zu führen ist, sollte die Breite des Führungsschlitzes zumindest geringfügig größer sein als der Durchmesser der Leitungsführungsvorrichtung bzw. des Bündels. Unter der Breite wird hier der minimale Abstand einander gegenüberliegender Grenzflächen des Führungsschlitzes voneinander in Richtung senkrecht zur Drehachse und senkrecht zur radialen Richtung bezeichnet. Dies hat u.a. den Vorteil, dass dem Anwender das Einführen der Leitung/en in die Drehführung vereinfacht wird. Besonders bevorzugt ist die Breite des Führungsschlitzes jedoch so, dass kein übermässige Spiel entsteht, z.B. kleiner als das Dreifache des Durchmessers der zu führenden Leitung bzw. Leitungsführungsvorrichtung.

Eine erste Grenzfläche des Führungsschlitzes kann dabei als konvexe Oberfläche eines Halbzylinders mit einer senkrecht, insbesondere radial, zur Drehachse verlaufenden Zylinderachse ausgebildet sein. Eine zweite Grenzfläche kann in einer Umfangsrichtung bzw. in einer Richtung senkrecht zur Drehachse und senkrecht zur radialen Richtung der ersten Grenzfläche gegenüberliegen. Die zweite Grenzfläche des Führungsschlitzes kann, in einer Schnittebene senkrecht zur Drehachse, parallel zu der ersten Grenzfläche verlaufen. Die zweite Grenzfläche kann als konkave Oberfläche, insbesondere konjugiert zur halbzylindrischen konvexen Oberfläche, ausgebildet sein, bspw. als eine konkave Oberfläche eines Halbzylinders, dessen Zylinderachse parallel zur Zylinderachse der ersten Grenzfläche verläuft. Der Führungsschlitz kann somit in Radialrichtung zur Drehachse betrachtet insbesondere im Wesentlichen U-förmig sein mit einem in bzw. entgegen der Drehrichtung weisenden U-Bogen.

In einer Schnittebene parallel zu der Drehachse kann der Führungsschlitz insbesondere die Form eines Ringsegments aufweisen. Der Innenradius des Ringsegments sollte größer gleich dem minimalen, noch zulässigen Radius des Umlenkbereichs der zu führenden Leitung sein.

Der Außenradius des Ringsegments kann insbesondere größer als der Innenradius des Ringsegments sein.

Der minimale Abstand zwischen der ersten und der zweiten Grenzfläche des Führungsschlitzes in eine Richtung senkrecht zur Drehachse und senkrecht zur radialen Richtung bzw. die lichte Breite des Führungsschlitzes ist vorzugsweise größer gleich des Durchmessers der zu führenden Leitung bzw. Leitungsführungsvorrichtung, besonders bevorzugt kleiner als das Dreifache des Durchmessers der zu führenden Leitung bzw. Leitungsführungsvorrichtung.

Der Abstand zwischen der ersten und der zweiten Grenzfläche des Führungsschlitzes kann in radiale Richtung, insbesondere in radialer und axialer Richtung, im Wesentlichen konstant bleiben. Dabei kann der Abstand der Breite der Aufnahmenut bzw. der Spurbreite der Aufnahmenut in radiale Richtung entsprechen oder nur unwesentlich größer sein.

Eine Bauweise mit einem relativ schmalen Führungsschlitz ist besonders vorteilhaft u.a. bei sehr flexiblen Leitungen, deren minimal zulässiger Biegeradius in Vergleich zum Leitungsdurchmesser gering ist, um ein Auswickeln des Leitungsabschnitts aus der Drehführung bei einem Umwickeln von einem drehenden in ein ruhendes Aufnahmeteil zu verhindern.

Die erste Grenzfläche des Führungsschlitzes, bzw. ein Teil der ersten Grenzfläche, kann einen Teil der Wirkfläche bilden. Die planebenen Seiten der Umlenkeinheit, bzw. jeweils ein Teil der planebenen Seiten, können vorzugsweise einen weiteren Teil der Wirkfläche bilden. Diese Teilflächen gehen vorzugsweise stufenlos bzw. stetig ineinander über.

Die Wirkfläche kann insbesondere Teile der ersten Grenzfläche des Führungsschlitzes und Teile der planebenen Seiten umfassen.

In einer bevorzugten Ausführungsform der Erfindung hat die Wirkfläche zwei separate Bereiche bzw. ist zweiteilig. Der erste Bereich der Wirkfläche umfasst vorzugsweise einen Teil der ersten Grenzfläche des Führungsschlitzes, und zwar den Teil, der an die erste planebene Seite der Umlenkeinheit angrenzt, und einen Teil dieser ersten planebenen Seite, der an die erste Grenzfläche des Führungsschlitzes angrenzt. Der zweite Bereich der Wirkfläche umfasst vorzugsweise einen anderen Teil der ersten Grenzfläche des Führungsschlitzes, und zwar den Teil, der an die zweite planebene Seite der Umlenkeinheit angrenzt, und einen Teil dieser zweiten planebenen Seite, der an die erste Grenzfläche des Führungsschlitzes angrenzt.

Der Führungsschlitz kann vorzugsweise abgerundete Übergänge aufweisen, um die die zu führende Leitung bzw. Leitungsführungsvorrichtung zu schonen. Insbesondere wenn die Drehführung für innerhalb einer Leitungsführungsvorrichtung aufgenommene Leitungen verwendet wird, können die abgerundeten Übergänge ein Verhaken von Bauteilen der Leitungsführungsvorrichtung an der Drehführung vorbeugen.

Der Krümmungsradius am innersten Endbereich der Windungen der Aufnahmenut kann vorzugsweise größer gleich als der minimale noch zulässige Radius des Umlenkbereichs der zu führenden Leitung sein, sodass der in der Drehführung aufgenommene Leitungsabschnitt nicht überbogen und nicht beschädigt wird.

Die axiale Erstreckung der Umlenkeinheit kann insbesondere größer gleich als das Zweifache des minimalen noch zulässigen Radius des Umlenkbereichs der zu führenden Leitung sein.

In einer weiteren Ausführungsform ist alternativ oder ergänzend vorgesehen, dass die Aufnahmeteile insbesondere eine geringere axiale Erstreckung aufweisen als die Umlenkeinheit. Eine Drehführung nach dieser Ausführungsform ist besonders flach. Die kleinste mögliche Höhe der Drehführung bzw. die kleinste mögliche Abmessung der Drehführung in axiale Richtung kann dabei ungefähr gleich der Summe des Zweifachen des Durchmessers des Leitungsabschnitts, des Zweifachen des minimalen noch zulässigen Radius des Umlenkbereichs der zu führenden Leitung, und der Materialstärken der Aufnahmeteile im Bereich des Bodens der Aufnahmenuten entsprechen.

Jedes der Aufnahmeteile ist vorzugsweise tellerartig ausgeführt, mit zwei flächigen Hauptseiten, die sich jeweils entlang einer Hauptebene des Aufnahmeteils, die senkrecht zur Drehachse verläuft, erstrecken. Schmalseiten der Aufnahmeteile können sich quer zur Hauptseite jeweils zwischen zwei Hauptseiten in axiale Richtung erstrecken. Die Aufnahmenut kann zu einer der Hauptseiten offen sein. Diese Hauptseite schließt in die axiale Richtung vorzugsweise planeben ab. Diese Formgebung ist besonders vorteilhaft, wenn die Hauptseite des Aufnahmeteils als Gegenfläche mit einer planebenen Seite einer tellerartigen Umlenkeinheit bündig abschließen soll, sodass die Aufnahmenut durch die planebene Seite der Umlenkeinheit abgedeckt werden kann.

Das axiale Spiel zwischen den Aufnahmeteilen und der Umlenkeinheit ist vorzugsweise einstellbar, besonders bevorzugt stufenlos einstellbar, bspw. durch ein Schraube-Mutter-Paar. Das axiale Spiel kann vorzugsweise an den Durchmesser der zu führenden Leitung bzw. Leitungsführungsvorrichtung anpassbar sein. So kann die selbe Drehführung für Leitungen verschiedenen Durchmessers aus einer Bandbreite der Durchmesser verwendet werden.

In einer weiteren Ausführungsform kann die Tiefe, vorzugsweise die Tiefe und die Breite, der Aufnahmenut, d.h. die Spurtiefe und Spurbreite der Aufnahmenut, an den Durchmesser der zu führenden Leitung angepasst sein. Das Aufnahmeteil kann ablesbare Angaben zum zulässigen Bereich der Leitungsdurchmesser, für die sie geeignet ist, an ihrer Außenfläche tragen, bspw. auch in Form einer Codierung, z.B. als QR-Code. Auch Hinweise zum Zusammenbau können für den Nutzer lesbar an den Bestandteilen vorgesehen sein, z.B. Bauteilkennungen der beiden Aufnahmeteile. Entsprechendes gitl acuh für die Umlenkeinheit.

Eine Umlenkeinheit kann ggf. auch mit verschiedenen Aufnahmeteilen kombiniert werden, die sich von anderen Aufnahmeteilen bspw. in der Geometrie der Aufnahmenut oder in anderen Parametern unterscheiden. Die zwei gleichzeitig in einer Drehführung verwendeten Aufnahmeteile haben jedoch vorzugsweise die gleiche Geometrie der Aufnahmenut, insbesondere die gleiche Tiefe und Breite der Aufnahmenut und den gleichen radialen Abstand der Windungen voneinander.

Die Windungen jeder Aufnahmenut können dabei entsprechend einer ebenen Spirale verlaufen, insbesondere entsprechend einer archimedischen Spirale. Diese Variante ist besonders platzsparend und erlaubt größere Anzahl Windungen pro Fläche eines Aufnahmeteils.

Zumindest ein Aufnahmeteil kann eine Durchführöffnung zur innersten Windung aufweisen. Ein Aufnahmeteil kann eine Durchführöffnung zur äußersten Windung aufweisen, oder eine zur innersten und eine zur äußersten Windung. Beide Aufnahmeteile können auch jeweils eine baugleiche Gestaltung mit beiden Durchführöffnungen aufweisen, um einen wahlfreien Anschluss zu erlauben.

Die Durchführöffnungen erlauben den Zugang für die zu führende/n Leitung/en zu den Aufnahmenuten der Drehführung und auch den Austritt der Leitung/en aus der Drehführung. Die Drehführung kann an zumindest einen der Durchführöffnungen auch eine Lagesicherung wie z.B. eine Arretiervorrichtung, Haltering oder dgl. für die zu führende Leitung aufweisen, um diese Leitung in die Leitungslängsrichtung an mindestens einem Aufnahmeteil festzulegen. Die Durchführöffnung kann in besonders einfacher Lösung als radialer Schlitz von einem Rand einer Schmalseite des Aufnahmeteils hinzu innersten Windung ausgeführt sein. Diese Durchführöffnung kann den Zugang für die zu führende/n Leitung/en sowohl zu der innersten als auch zu der äußersten Windung erlauben und ist insbesondere für ein schnelles seitliches Einführen des aufzunehmenden Leitungsabschnitts von Vorteil, da kein Einziehen der Leitung(en) - im Sinne eines Einfädelns - nötig ist.

Die Aufnahmeteile können in bevorzugter Ausführungsform auch Gleichteile sein. Diese Variante vereinfacht die Lagerhaltung und ist herstellungstechnisch vorteilhaft, besonders für Spritzgussverfahren, da nur ein Typ Spritzgussform für die beiden Aufnahmeteile nötig ist.

In einer einfachsten Ausführungsform kann die Drehführung nur aus den beiden Aufnahmeteilen und der Umlenkeinheit als wesentlichen Formteilen bestehen, d.h. die Drehführung kann einen dreiteiligen Aufbau haben wobei übliches Zubehör, wie z.B. Endbefestigungen, Zugentlastungen etc. nicht einbezogen ist.

Die Aufnahmeteile und die Umlenkeinheit können vorzugsweise aus Kunststoff, inbesondere einem elektrisch nicht leitfähigen bzw. isolierenden Kunststoff, hergestellt sein, insbesondere im Spritzgussverfahren.

Die mindestens eine oder mehrere Leitungen können in einer räumlich auslenkbaren Leitungsführungsvorrichtung bzw. Energieführungskette und/oder in einer flexiblen Hülle aufgenommen sein, oder auch ohne Hülle als Strang verbunden sein.

Eine flexible Hülle, insbesondere ein Schlauch, wie bspw. Wellschlauch, kann mehrere elektrische und/oder optische Kabel oder hydraulische und/oder pneumatische Schläuche zusammenführen.

Räumlich auslenkbare Leitungsführungsvorrichtungen sind bspw. aus WO 2004/093279 A1 oder WO 2014/161734 A1 bekannt. Derartige Leitungsführungsvorrichtungen können im Verlauf ähnlich wie eine Leitung in der Drehführung zwischen zwei relativ zueinander drehbaren Punkten geführt werden und ihrerseits die gewünschten Leitungen geschützt und unterbrechungsfrei führen. Es kommt aber grundsätzlich jede Art rämlich auslenkbarer Leitungsführungsvorrichtung bzw. Energieführung in Betracht, z.B. mit Kugelgelenkverbindungen oder kardanisch mehrachsig abwinkelbaren Gelenkverbindungen zwischen den Gliedern der Führung. Auch einfacherer flexible Führungsschläuche bzw. Schlauchpakete oder dgl. können ohne weiteres in einer erfindungsgemäßen Drehführung aufgenommen werden. Dies ist bspw. für Anwendungen an Industrierobotern vorteilhaft.

Weitere Einzelheiten, Merkmale und Vorteile der Erfindung ergeben sich - ohne Beschränkung der Allgemeinheit der vorstehenden Lehre - aus der nachfolgenden, ausführlichen Beschreibung bevorzugter Ausführungsbeispiele anhand der beiliegenden Abbildungen. Gleiche oder gleichwirkende Teile sind dabei mit denselben Bezugszeichen bezeichnet und nur einmal beschrieben. Hierbei zeigen:
**FIG.1A-1B****:** ein erstes Ausführungsbeispiel der Drehführung in perspektivischer Ansicht (FIG.1A) und in Frontansicht (FIG.1B);
**FIG.2A-2C****:** perspektivische Ansichten von Aufnahmeteilen der Drehführung gemäß FIG.1 (FIG.2A, 2C) und von einer Umlenkeinheit der Drehführung gemäß FIG.1 (FIG.2B);
**FIG.3A-3B****:** schematische Darstellungen zur Funktionsweise der Drehführung gemäß FIG.1 mit zwei dargestellten Betriebspositionen; und
**FIG.4****:** ein weiteres Ausführungsbeispiel der Drehführung in Frontansicht.

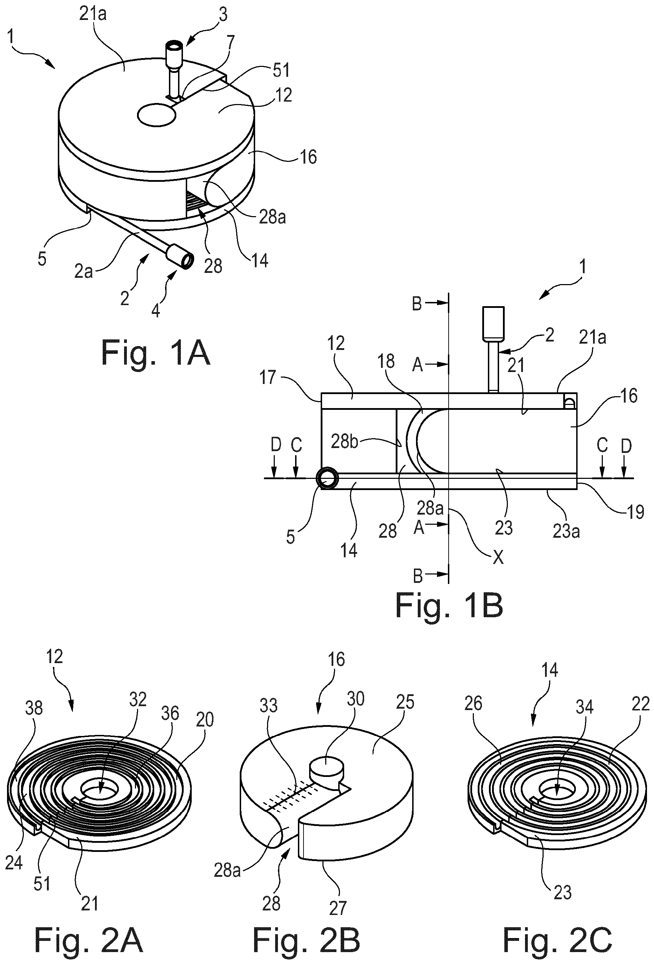

FIG.1A-1B zeigen ein Ausführungsbeispiel der Drehführung 1 in einem betriebsbereiten bzw. zusammengebauten Zustand. Die dargestellte Leitung 2 hat hier zwei um die Drehachse X der Drehführung 1 relativ zueinander drehbare Anschlusspunkte 3 und 4 jeweils nah an Enden eines in der Drehführung 1 aufgenommenen Leitungsabschnitts 2a, diese Anschlüsse sind jedoch nur zum Zwecke der Darstellung besonders hervorgehoben und nicht zwingend notwendig.

Die Drehführung 1 kann als Einbauteil innenliegend eingesetzt werden, wobei bzgl. der Längsrichtung einer Leitung 2 diese unterbrechungsfrei durchgehend bspw. von einem Gerät oder einem Teil eines Geräts zu einem anderen Gerät bzw. einem anderem Teil des Geräts verläuft. Jeder beliebige Leitungsabschnitt 2a kann dabei in der Drehführung 1 aufgenommen werden. Der Leitungsabschnitt 2a kann durch die Durchführöffnungen 5, 7 bzw. durch den radialen Schlitz 51, der diese Durchführöffnungen ausbildet bzw. verbindet, in die Drehführung 1 eingeführt bzw. aus der Drehführung 1 ausgeführt werden.

Die Drehführung 1 umfasst z.B. zwei baugleiche Aufnahmeteile 12, 14, und eine Umlenkeinheit 16. Diese drei Bauteile der Drehführung 1 können z.B. jeweils scheibenförmig und im Wesentlichen rund ausgebildet sein. Die Drehführung 1 ist ähnlich einer Sandwichbauweise zusammengesetzt, mit der Umlenkeinheit 16 in Axialrichtung zwischen den beiden Aufnahmeteilen 12, 14 liegend. Die Aufnahmeteile 12, 14 nehmen jeweils einen der im Gegensinn zueinander aufgewickelten Teilabschnitte 29, 31 des Leitungsabschnitts 2a auf, wobei der Leitungsabschnitt 2a zwischen den Teilabschnitten 29, 31 einen Umlenkbereich 18 aufweist, in dem er umgelenkt bzw. gewendet wird. Der Umlenkbereich 18 ist U-förmig gebogen, und zwar um eine Umlenkachse, die senkrecht zur Drehachse X verläuft. Der Umlenkbereich 18 wird durch die Umlenkeinheit 16 gestützt, die u.a. verhindert, dass der minimale noch zulässige Krümmungsradius des Umlenkbereichs 18 unterschritten wird. Dafür weist die Umlenkeinheit 16 eine Umlenkführung 28a.

Die Aufnahmeteile 12, 14 sind Gleichteile und seitenverkehrt bzgl. einer Ebene senkrecht zur Drehachse aufeinander zu weisend angeordnet.

Die Aufnahmeteile 12, 14 bauen vergleichsweise flach und weisen jeweils eine erste Hauptseite 21, 23, eine zweite Hauptseite 21a, 23a und eine Schmalseite 17, 19 auf, wobei die Schmalseite 17 bzw. 19 die Hauptseiten 21 und 21a bzw. 23 und 23a verbindet. Die Höhe bzw. die axiale Abmessung der Schmalseite 17, 19 ist mehrfach kleiner als der Durchmesser der Hauptseite 21, 21s, 23, 23a. Die Umlenkeinheit 16 ist ebenfalls flach und hat zwei einander abgewandte planebene Seiten 25, 27. Im zusammengesetzten Zustand der Drehführung 1 ist die erste Seite 25 der Umlenkeinheit 16 der ersten Hauptseite 21 des ersten Aufnahmeteils 12 zugewandt und die zweite Seite 27 der Umlenkeinheit 16 der ersten Hauptseite 23 des zweiten Aufnahmeteils 14 zugewandt.

Die Aufnahmeteile 12, 14 und die Umlenkeinheit 16 sind relativdrehbar um die Drehachse X gelagert. Die Umlenkeinheit 16 weist dazu mittig einen Drehbolzen 30 auf, der kreiszylindrisch und koaxial zur Drehachse X ausgebildet ist. Die Aufnahmeteile 12, 14 weisen mittig und koaxial zur Drehachse X jeweils eine runde Lagerungsaufnahme in Form einer Drehöffnung 32, 34 auf, passend zu dem Drehbolzen der Umlenkeinheit 16, mittels deren die Aufnahmeteile 12, 14 an der Umlenkeinheit 16 drehbar gelagert sind. Das axiale Spiel zwischen den drei Bauteilen 12, 14, 16 kann stufenlos z.B. durch ein Schrauben-Mutter-Paar eingestellt werden. Dazu kann der Drehbolzen 30 eine axiale Durchgangsbohrung für diese Schraubverbindung aufweisen, welche zugleich die Aufnahmeteile 12, 14 axial an der Umlenkeinheit 16 festhält und vice-versa.

FIG.2A-2C zeigen die einzelnen wesentlichen Bauteile der Drehführung 1 im Detail. Ein Aufnahmeteil 12, 14 weist an seiner ersten Hauptseite 21, 23 eine Aufnahmenut 20, 22 auf, die als Vertiefung an der ersten Hauptseite des Aufnahmeteils 12, 14 ausgebildet ist, zur Aufnahme des Leitungsabschnitts 2a. Die Aufnahmenut 20, 22 hat in der Hauptebene des Aufnahmeteils 12, 14 senkrecht zur Drehachse X die Form einer archimedischen Spirale mit einer Mehrzahl um die gemeinsame Achse, die der Drehachse X entspricht, verlaufenden Windungen 24, 26. Die Spirale startet am Anfang der innersten Windung 36 von einem Anfangsradius rₐ und verläuft über mehrere Windungen 24 zu einem Endradius rₑ am Ende der äußersten Windung 38. Der Abstand einer Windung 24 zu der nächstliegenden Windung 24 ist immer gleich. Alle Windungen 24 der Aufnahmenut 20 liegen in derselben Ebene, der Hauptebene des Aufnahmeteils 12, 14, die senkrecht zur Drehachse X verläuft. Die Aufnahmenut 20 hat über ihren gesamten Verlauf gleichbleibende Tiefe bzw. Spurtiefe in axialer Richtung und gleichbleibende Spurbreite in radialen Richtung. Die Spurtiefe und Spurbreite sind passend zum Querschnitt der Leitung 2 bzw. des aufzunehmenden Leitungsabschnitts 2a ausgewählt. Der Leitungsabschnitt kann dabei komplett bzgl. der axialen Richtung in der Aufnahmenut 20, 22 aufgenommen werden. Die Aufnahmenut 20, 22 ist offen zu der Hauptseite 21, 23, die in dem zusammengesetzten Zustand der Drehführung 1 wie in FIG 1A, B der Umlenkeinheit 16 zugewandt ist. Diese Hauptseite 21, 23 schließt planeben nach außen ab.

Die Umlenkeinheit 16 weist einen Führungsschlitz 28 auf, dessen Grenzflächen 28a, 28b, die den Führungsschlitz 28 im Umfangsrichtung begrenzen, als Umlenkführung für den Umlenkbereich 18 des in der Drehführung 1 aufgenommenen Leitungsabschnitts 2a dienen. In axialer Richtung erstreckt sich der Führungsschlitz 28 von einer Seite 25 zu der anderen Seite 27 der Umlenkeinheit 16. In einer Ebene senkrecht zur Drehachse X erstreckt sich der Führungsschlitz 28 von einem Rand der Umlenkeinheit 16, d.h. vom Punkt, dessen Abstand zur Drehachse X dem Endradius rₑ der äußeren Windung 38 der Aufnahmenut 20 entspricht, bis zum Punkt, dessen Abstand zur Drehachse X dem Anfangsradius rₐ der innersten Windung 36 der Aufnahmenut 20 entspricht. So kann der Umlenkbereich 18 an den Grenzflächen 28a, 28b des Führungsschlitzes 28 über die ganze radiale Erstreckung der Aufnahmenut 20 geführt werden. Die Breite des Führungsschlitzes 28 ist im gezeigten Beispiel in etwa doppelt so groß wie der Durchmesser des Leitungsabschnitts 2a, sodass der Umlenkbereich 18 des Leitungsabschnitts 2a eng an den beiden Grenzflächen 28a, 28b geführt wird.

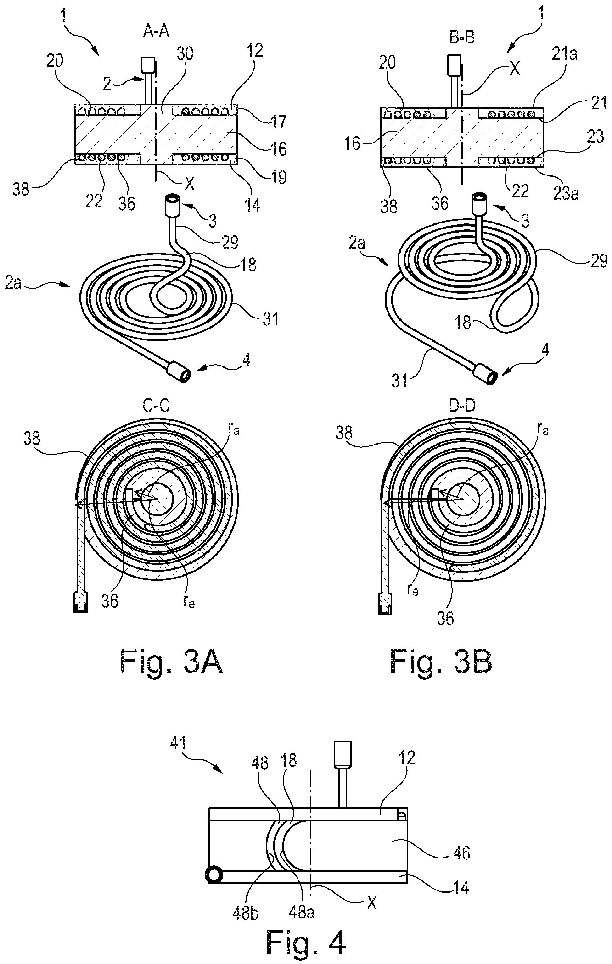

Die erste Grenzfläche 28a ist als konvexe Oberfläche eines Halbzylinders mit einer radial zur Drehachse X verlaufenden Zylinderachse gestaltet. Die zweite Grenzfläche 28b verläuft in dem Ausführungsbeispiel in FIG.1A, 1B und 2B gerade und in einer Ebene parallel zur Drehachse und senkrecht zu den planebenen Seiten 25, 27 der Umlenkeinheit 16. Das ist die einfachste Ausführungsform. Die Drehführung 41 nach dem Ausführungsbeispiel in FIG.4 weist dagegen eine konkave zylindrische zweite Grenzfläche 48b des Führungsschlitzes 48 auf. Der Abstand zwischen der ersten Grenzfläche 48a und der zweiten Grenzfläche 48b in FIG.4 ist entlang des Führungsschlitzes stets gleichbleibend, sodass der Umlenkbereich 18 des Leitungsabschnitts 2a relativ spielfrei geführt werden kann. in den übrigen Merkmalen ist die Drehführung 41 nach dem Ausführungsbeispiel in FIG.4 vorzugsweise prinzipgleich ausgebildet wie die Drehführung 1 nach dem ersten Ausführungsbeispiel in FIG.1-2.

FIG.2B zeigt die Wirkfläche 33 der Umlenkeinheit 16 in Schraffur. Die Wirkfläche 33 ist nicht als eine genau abgegrenzte Fläche zu verstehen. Sie erstreckt sich in radiale Richtung zwischen der äußersten Windung 38 der Aufnahmenut 20, d.h. im vorliegenden Ausführungsbeispiel vom Rand der Umlenkeinheit 16, und der innersten Windung 36 der Aufnahmenut 20. Die genaue Erstreckung der Wirkfläche in Umfangsrichtung hängt u.a. von dem Durchmesser des zu führenden Leitungsabschnitts 2a ab. Die Wirkfläche 33 wird als Teil der Oberfläche der Umlenkeinheit 16 verstanden, die mit der Aufnahmenut 20, 22 des Aufnahmeteils 12, 14 zusammenwirkt, um den Leitungsabschnitt 2a in die Aufnahmenut 20, 22 aus dem Umlenkbereich 18 abzulegen. Die Wirkfläche 33 hat zwei Bereiche, die jeweils von einer der Seiten 25, 27 zu sehen wären, deswegen ist in der FIG, 2A nur ein Bereich der Wirkfläche 33 zu sehen. Der in FIG.2B sichtbare Bereich der Wirkfläche 33 umfasst einen Teil der Oberfläche der Seite 25 entlang der ersten Grenzfläche 28a des Führungsschlitzes 28 und einen in der FIG.2B oberen Teil ebendieser ersten Grenzfläche 28a, die an die Oberfläche der Seite 25 grenzt. Der zweite Bereich der Wirkfläche 33 ist dem ersten Bereich abgewandt und entsprechend ausgebildet. Ein Bereich der Wirkfläche 33 wirkt beim Drehen der Drehführung 1 und Umwickeln des Leitungsabschnitts 2a in eine Richtung und der andere Bereich entsprechend beim Drehen der Drehführung 1 in die entgegengesetzte Richtung.

Die Funktionsweise der Drehführung 1 wird nun anhand der FIG.3A und 3B beschrieben. FIG.3A, 3B zeigen jeweils oben (in Frontansicht) und unten (in Draufsicht) auf der Zeichenfläche jeweils zwei verschiedene Betriebspositionen der Drehführung 1 mit einem darin aufgenommenen Leitungsabschnitt 2a. Mittig auf der Zeichenfläche in der FIG.3A, 3B ist der Leitungsabschnitt 2a (in perspektivischer Ansicht) so, wie er in der Drehführung 1 zwischen den Punkten 3 und 4 verläuft, gezeigt (für eine bessere Übersicht jedoch ohne der Drehführung 1). Der untere Punkt 4 der Leitung 2 ist ruhend bzw. stillstehend, der obere Punkt 3 der Leitung 2 wird relativ zu dem unteren Punkt 4 um die Drehachse X gedreht. Der obere Aufnahmeteil 12 der Drehführung 1 dreht sich um die Drehachse X zusammen mit dem Punkt 4 relativ zu dem unteren Aufnahmeteil 14, der im dargestellten Beispiel ruhend bzw. stillstehend ist oder an einer stationären nicht gezeigten Fläche befestigt ist. Der Leitungsabschnitt 2a kann nahe zum Punkt 3 an dem Aufnahmeteil 12 bzw. nahe der innersten Windung 36 in Längsrichtung der Leitung 2 arretiert sein. Entsprechend kann auch nahe am Punkt 4 der andere Teilabschnitt arretiert sein.

FIG.3A zeigt eine beispielhafte Betriebsposition der Drehführung 1, in der der aufgenommene Leitungsabschnitt 2a sich großteils in dem Aufnahmeteil 14, in der FIG.3A, 3B dem ruhenden unteren Aufnahmeteil, befindet und alle Windungen von der äußersten Windung 38 bis zur innersten Windung 36 der unteren Aufnahmenut 22, d.h. von dem Endradius rₑ beinahe bis zum Anfangsradius rₐ der unteren Aufnahmenut 22 fast ausfüllt. In dieser Betriebsposition ist der in dem unteren Aufnahmeteil 14 aufgenommene Teilabschnitt 31 des Leitungsabschnitts 2a viel größer bzw. länger als der in dem oberen Aufnahmeteil 12 aufgenommene Teilabschnitt 29. Die beiden gegensinnigen Teilabschnitte 29, 31 sind durch den Umlenkbereich 18 verbunden, in dem die Leitung 2 umgeschlagen bzw. umgelenkt ist. Beim Drehen des oberen Aufnahmeteils 12 wandern diese Abschnitte (Teilabschnitte 29, 31 und Umlenkbereich 18) in Längsrichtung der Leitung 2 und übergehen ineinander. Der Umlenkbereich dreht sich dabei im Umfangsrichtung und verschiebt sich in radiale Richtung.

Beim Drehen des Aufnahmeteils 12 in eine Richtung, in FIG.3A gegen den Uhrzeigersinn, wird ein Längsbereich des Teilabschnitts 31 aus der innersten Windung 36 der ausgefüllten Aufnahmenut 22 über den Umlenkbereich 18 in die innerste Windung 36 der leeren Aufnahmenut 20, bzw. der Aufnahmenut des oberen Aufnahmeteils 12, umgelegt, d.h. der obere Teilabschnitt 29 wird dadurch zunehmend größer. Wenn das Drehen in diese Richtung fortgesetzt wird, kann der in der Drehführung 1 aufgenommene Leitungsabschnitt 2a entlang der Spirale die Windungen der oberen Aufnahmenut 12 bis zur äußersten Windung 38 einschließlich füllen, d.h. in das obere Aufnahmeteil 12 umgewickelt werden. Der Umlenkbereich 18 dreht auch gegen den Uhrzeigersinn und wandert dabei in radialer Richtung weg von der Drehachse X, d.h. sein radialer Abstand zur Drehachse X wächst, und zwar von dem Anfangsradius rₐ zum Endradius rₑ der Aufnahmenuten 20, 22, wie man aus dem Vergleich der FIG.3A und 3B sehen kann. Der Umlenkbereich 18 liegt dabei mit seiner inneren bzgl. seiner Umlenkachse Fläche an der ersten Grenzfläche 28a des Führungsschlitzes 28 an, wie in FIG. 1B bzw. FIG.4 gezeigt. Der Umlenkbereich 18 ist dabei durch die Umlenkführung der Umlenkeinheit 16, nämlich die erste Grenzfläche 28a, die halbzylindrisch und konvex ist, gestützt. Die Umlenkeinheit 16 wird dabei in dieselbe Richtung mitgedreht. Da die erste Grenzfläche 28a der Umlenkeinheit 16 sich von dem Anfangsradius ra zum Endradius re in radiale Richtung erstreckt, wird der Umlenkbereich 18 beim Umwickeln in die obere Aufnahmenut 20 durch die erste Grenzfläche 28a durchgehend unterstützt.

Die erste Grenzfläche 28a des Führungsschlitzes 28 hat, zusätzlich zum Stützen des Umlenkbereichs, eine zweite Funktion, nämlich als Teil der Wirkfläche 33, der mit der Aufnahmenut 20 bei dem Umwickeln des Leitungsabschnitts 2a in die obere Aufnahmenut 20 zusammenwirkt.

Die Wirkfläche 33 umfasst den Teil der ersten Grenzfläche 28a, der an die planebene Seite 25 angrenzt, und erstreckt sich ebenfalls von dem Anfangsradius rₐ zum Endradius rₑ in radiale Richtung. Daher wird der Leitungsabschnitt 2a beim Umlegen in die Windungen der oberen Aufnahmenut 20 durch die Wirkfläche 33 durchgehend über die radiale Erstreckung der Aufnahmenut 20 unterstützt. Der Umlenkbereich 18 verschiebt sich beim Drehen entlang der mitdrehenden Wirkfläche 33 in radiale Richtung und ist dabei mit jeder Umdrehung für die nächste aufzufüllende Windung der Aufnahmenut 12 passend positioniert.

Ein weiterer Teil der Wirkfläche 33, der der oberen Aufnahmenut 20 zugewandt ist, ist als Teil der planebenen Seite 25 der Umlenkeinheit 16 planeben, schließt mit der planebenen Hauptseite 21 des oberen Aufnahmeteils 12 bündig ab und deckt die Aufnahmenut 20 von unten ab, sodass der gerade beim Drehen in die Aufnahmenut 20 eingeführte Längsabschnitt des Leitungsabschnitts 2a in der Aufnahmenut 20 in axiale Richtung eingeschlossen bzw. gesichert wird bzw. in seiner Bewegungsfreiheit in axiale Richtung begrenzt wird und nicht herausfallen kann.

Wenn nun das obere Aufnahmeteil 12 der Drehführung 1 in die entgegengesetzte Richtung, in FIG.3B im Uhrzeigersinn, gedreht wird, wird ein Längsbereich des Leitungsabschnitts 2a aus der äußersten Windung 38 der oberen ausgefüllten Aufnahmenut 20 über den Umlenkbereich 18 in die äußerste Windung 38 der unteren Aufnahmenut 22 umgelegt (diese Betriebsposition ist in FIG.3B dargestellt). Wenn das Drehen in diese Richtung fortgesetzt wird, wird der in der Drehführung 1 aufgenommene Leitungsabschnitt 2a entlang der Spirale alle Windungen der unteren Aufnahmenut 22 bis zur äußersten Windung 38 wieder füllen (wie in Betriebsposition in FIG.3A dargestellt ist). Die Umlenkeinheit 16 wird in dieselbe Richtung durch den Leitungsabschnitt 2a mitgedreht. Der Umlenkbereich 18 liegt dabei mit seiner äußeren bzgl. seiner Umlenkachse Fläche an der zweiten Grenzfläche 28b des Führungsschlitzes 28 an. Der zweite, untere Bereich der mitdrehenden Wirkfläche 33, der in der FIG.2B nicht sichtbar ist, wirkt dabei mit der unteren Aufnahmenut 22 zusammen, um das Umwickeln des Leitungsabschnitts 2a in das Aufnahmeteil 14 zu unterstützen.

### Bezugszeichenliste

FIG.1A, B
   - 1: Drehführung
   - 2: Leitung
   - 2a: Leitungsabschnitt
   - 3: erster Punkt
   - 4: zweiter Punkt
   - 5: Durchführöffnung
   - 7: Durchführöffnung
   - 12: Aufnahmeteil
   - 14: Aufnahmeteil
   - 16: Umlenkeinheit
   - 17: Schmalseite eines Aufnahmeteils
   - 18: Umlenkbereich
   - 19: Schmalseite eines Aufnahmeteils
   - 21a: zweite Hauptseite des einen Aufnahmeteils
   - 28: Führungsschlitz
   - 28a: erste Grenzfläche des Führungsschlitzes
   - 28b: zweite Grenzfläche des Führungsschlitzes
   - 51: radialer Schlitz
   - X: Drehachse
FIG.2A, 2B, 2C
   - 12: Aufnahmeteil
   - 14: Aufnahmeteil
   - 16: Umlenkeinheit
   - 20: Aufnahmenut
   - 21: erste Hautseite des einen Aufnahmeteils
   - 21a: zweite Hautseite des einen Aufnahmeteils
   - 22: Aufnahmenut
   - 23: erste Hautseite des anderen Aufnahmeteils
   - 23a: zweite Hautseite des anderen Aufnahmeteils
   - 24: Windung
   - 25: Seite der Umlenkeinheit
   - 26: Windung
   - 27: Seite der Umlenkeinheit
   - 28: Führungsschlitz
   - 28a: erste Grenzfläche des Führungsschlitzes
   - 30: Drehbolzen
   - 32: Drehöffnung
   - 33: Wirkfläche
   - 34: Drehöffnung
   - 36: innerste Windung der Aufnahmenut
   - 38: äußerste Windung der Aufnahmenut
   - 51: radialer Schlitz
FIG.3A, 3B
   - 1: Drehführung
   - 2: Leitung
   - 2a: Leitungsabschnitt
   - 3: erster Punkt
   - 4: zweiter Punkt
   - 12: Aufnahmeteil
   - 14: Aufnahmeteil
   - 16: Umlenkeinheit
   - 17: Schmalseite eines Aufnahmeteils
   - 18: Umlenkbereich
   - 19: Schmalseite eines Aufnahmeteils
   - 20: Aufnahmenut
   - 21: erste Hautseite des einen Aufnahmeteils
   - 21a: zweite Hautseite des einen Aufnahmeteils
   - 22: Aufnahmenut
   - 23: erste Hautseite des anderen Aufnahmeteils
   - 23a: zweite Hautseite des zweiten Aufnahmeteils
   - 29: Teilabschnitt des Leitungsabschnitts
   - 30: Drehbolzen
   - 31: Teilabschnitt des Leitungsabschnitts
   - 36: innerste Windung der Aufnahmenut
   - 38: äußerste Windung der Aufnahmenut
   - X: Drehachse
FIG. 4
   - 41: Drehführung
   - 12: Aufnahmeteil
   - 14: Aufnahmeteil
   - 46: Umlenkeinheit
   - 48: Führungsschlitz
   - 48a: erste Grenzfläche des Führungsschlitzes
   - 48b: zweite Grenzfläche des Führungsschlitzes
   - X: Drehachse

## Patentansprüche

1. Drehführung (1) für eine unterbrechungsfreie Führung mindestens einer Leitung (2) zwischen zwei relativ zueinander drehbaren Punkten (3, 4), die Drehführung (1) umfassend:
zwei um eine gemeinsame Drehachse (X) relativ zueinander drehbar gelagerte Aufnahmeteile (12, 14) zur Aufnahme von jeweils einem von zwei um die gemeinsame Drehachse (X) gegensinnig aufzuwickelnden Teilabschnitten (29, 31) eines in der Drehführung (1) aufnehmbaren Leitungsabschnitts (2a), und eine Umlenkeinheit (16) zum Stützen eines Umlenkbereichs (18), in welchem der Leitungsabschnitt (2a) der zu führenden Leitung (2) zwischen den gegensinnig aufzuwickelnden Teilabschnitten (29, 31) umschlagbar ist, sodass die mindestens eine zu führende Leitung (2) bei Relativdrehung der Aufnahmeteile (12, 14) um die gemeinsame Drehachse (X) von einem Aufnahmeteil (12, 14) in das andere Aufnahmeteil (12, 14) umgelenkt wird, **dadurch gekennzeichnet, dass** jedes der Aufnahmeteile (12, 14) eine spiralförmige Aufnahmenut (20, 22) mit einer Mehrzahl um die gemeinsamen Drehachse (X) und von einem Anfangsradius (rₐ) zu einem Endradius (rₑ) verlaufenden Windungen (24, 26) zum Aufnehmen eines Leitungsabschnitts (2a) zumindest teilweise in der Aufnahmenut (20, 22) aufweist, wobei die Windungen (24, 26) der Aufnahmenut (20, 22) jedes Aufnahmeteils (12, 14) jeweils in einer durch das Aufnahmeteil (12, 14) vorgegebenen Ebene senkrecht zur gemeinsamen Drehachse (X) verlaufen, und
**dass** die Umlenkeinheit (16) mindestens eine zwischen dem Anfangsradius (rₐ) und dem Endradius (rₑ) radial erstreckte oder radial verstellbare Wirkfläche (33) aufweist, welche mit den Aufnahmenuten (20, 22) der Aufnahmeteile (12, 14) zusammenwirkt um bei Relativdrehung der Aufnahmeteile (12, 14) um die gemeinsame Drehachse (X) den Leitungsabschnitt (2a) der mindestens einen zu führenden Leitung (2) aus der Aufnahmenut (20, 22) des einen Aufnahmeteils (12, 14) in die Aufnahmenut (20, 22) des anderen Aufnahmeteils (12, 14) umzuwickeln.

2. Drehführung (1) nach Anspruch 1, **dadurch gekennzeichnet,**
- **dass** die Umlenkeinheit (16) zwischen den Aufnahmeteilen (12, 14) drehbar angeordnet ist und eines von beiden Aufnahmeteilen (12, 14) anhand der Umlenkeinheit (16) am anderen Aufnahmeteil (12, 14) relativdrehbar gelagert ist; und/oder
- **dass** die Umlenkeinheit (16) eine Umlenkführung (28a, 28b) aufweist, die vorzugsweise zumindest einen Teil der Wirkfläche (33) umfasst.

3. Drehführung (1) nach Anspruch 1 oder 2, **dadurch gekennzeichnet, dass** die Umlenkeinheit (16) tellerartig, mit zwei insbesondere im Wesentlichen planebenen Seiten (25, 27) ausgeführt ist, wobei jede der Seiten (25, 27) jeweils einer Aufnahmenut (20, 22) einem der Aufnahmeteile (12, 14) zugewandt ist, und vorzugsweise mit einer entsprechenden Gegenfläche des Aufnahmeteils (12, 14) bündig abschließt, um die Aufnahmenut (20, 22) abzudecken und/oder axial zu begrenzen.

4. Drehführung (1) nach Anspruch 2 oder 3, **dadurch gekennzeichnet, dass** die Umlenkführung durch Grenzflächen (28a, 28b; 48a, 48b) eines Führungsschlitzes (28, 48) in der Umlenkeinheit (16) mit einer radialen und einer axialen Erstreckung ausgebildet ist.

5. Drehführung (1) nach Anspruch 4, **dadurch gekennzeichnet, dass** eine erste Grenzfläche (28a; 48a) des Führungsschlitzes (28; 48) als konvexe Oberfläche eines Halbzylinders mit einer senkrecht, insbesondere radial, zur Drehachse (X) verlaufenden Zylinderachse ausgebildet ist, wobei die in einer Umfangsrichtung der ersten Grenzfläche (28a; 48a) gegenüberliegende zweite Grenzfläche (28b; 48b) des Führungsschlitzes (28; 48) in einer Schnittebene senkrecht zur Drehachse (X) parallel zu der ersten Grenzfläche (28a; 48a) verläuft, und vorzugsweise als konkave Oberfläche, insbesondere konjugiert zur halbzylindrischen konvexen Oberfläche, ausgebildet ist, wobei die erste Grenzfläche (28a; 48a) vorzugsweise einen Teil der Wirkfläche (33) bildet und wobei besonders bevorzugt die planebenen Seiten (25, 27) der Umlenkeinheit (16) einen weiteren Teil der Wirkfläche (33) bilden.

6. Drehführung (1) nach einem der vorangehenden Ansprüche, **dadurch gekennzeichnet, dass** der Krümmungsradius am innersten Endbereich der Windungen (24, 26) der Aufnahmenut (20, 22) größer gleich als der minimale noch zulässige Radius des Umlenkbereichs (18) der zu führenden Leitung (2) ist.

7. Drehführung (1) nach einem der vorangehenden Ansprüche, **dadurch gekennzeichnet, dass** die axiale Erstreckung der Umlenkeinheit (16) größer gleich als das Zweifache des minimalen noch zulässigen Radius des Umlenkbereichs (18) der zu führenden Leitung (2) ist und die Aufnahmeteile (12, 14) eine geringere axiale Erstreckung aufweisen als die Umlenkeinheit (16).

8. Drehführung (1) nach einem der vorangehenden Ansprüche, **dadurch gekennzeichnet, dass** jedes der Aufnahmeteile (12, 14) tellerartig ausgeführt ist mit zwei Hauptseiten (21, 21a, 23, 23a), wobei die Aufnahmenut (20, 22) zu einer der Hauptseiten (21, 23) offen ist, und diese Hauptseite (21, 23) vorzugsweise planeben abschließt.

9. Drehführung (1) nach einem der vorangehenden Ansprüche, **dadurch gekennzeichnet, dass** das axiale Spiel zwischen den Aufnahmeteilen (12, 14) und der Umlenkeinheit (16) einstellbar ist, vorzugsweise stufenlos einstellbar ist.

10. Drehführung (1) nach einem der vorangehenden Ansprüche, **dadurch gekennzeichnet, dass** die Tiefe der Aufnahmenut (20, 22) an den Durchmesser einer zu führenden Leitung (2) angepasst ist.

11. Drehführung (1) nach einem der vorangehenden Ansprüche, **dadurch gekennzeichnet, dass** Windungen (24, 26) beider Aufnahmenuten (20, 22) entsprechend einer ebenen Spirale, insbesondere entsprechend einer archimedischen Spirale verlaufen.

12. Drehführung (1) nach einem der vorangehenden Ansprüche, **dadurch gekennzeichnet, dass** zumindest ein Aufnahmeteil (12, 14) eine Durchführöffnung (7) zur innersten Windung aufweist und vorzugsweise weiterhin **dadurch gekennzeichnet, dass** die Durchführöffnung als ein radialer Schlitz (51) von einem Rand einer Schmalseite (17, 19) des Aufnahmeteils (12, 14) hinzu innersten Windung ausgeführt ist.

13. Drehführung (1) nach einem der vorangehenden Ansprüche, **dadurch gekennzeichnet,**
- **dass** die Aufnahmeteile (12, 14) Gleichteile sind; und/oder
- **dass** die Drehführung (1) aus den Aufnahmeteilen (12, 14) und der Umlenkeinheit (16) besteht.

14. Drehführung (1) nach einem der vorangehenden Ansprüche, **dadurch gekennzeichnet, dass** die Aufnahmeteile (12, 14) und die Umlenkeinheit (16) aus Kunststoff hergestellt sind, insbesondere im Spritzgussverfahren.

15. Drehführung (1) nach einem der vorangehenden Ansprüche, **dadurch gekennzeichnet, dass** mehrere Leitungen in einer räumlich auslenkbaren Leitungsführungsvorrichtung und/oder in einer flexiblen Hülle oder dgl. aufgenommen sind, welche wiederum in der Drehführung angeordnet ist.

## Claims

1. A rotary guide (1) for uninterrupted guidance of at least one line (2) between two points (3, 4) rotatable relative to one another, the rotary guide (1) comprising:
two receiving parts (12, 14) mounted rotatably about a common axis of rotation (X) relative to one another, for receiving respectively one of two sub-portions (29, 31), to be wound up about the common axis of rotation (X) in opposing directions, of a line portion (2a) receivable in the rotary guide (1), and a deflection unit (16) for supporting a deflection region (18), in which the line portion (2a) of the line (2) to be guided can be turned around between the sub-portions (29, 31) to be wound up in opposing directions, such that the at least one line (2) to be guided is deflected on relative rotation of the receiving parts (12, 14) about the common axis of rotation (X) from one receiving part (12, 14) into the other receiving part (12, 14), **characterized in that** each of the receiving parts (12, 14) has a spiral receiving groove (20, 22) with a plurality of turns (24, 26) extending around the common axis of rotation (X) and from an initial radius (rₐ) to an end radius (rₑ) for at least partial reception of a line portion (2a) in the receiving groove (20, 22), wherein the turns (24, 26) of the receiving groove (20, 22) of each receiving part (12, 14) respectively extend in a plane predetermined by the receiving part (12, 14) perpendicular to the common axis of rotation,
and **in that** the deflection unit (16) has at least one active area (33) extended radially or adjustable radially between the initial radius (rₐ) and the end radius (rₑ), which interacts with the receiving grooves (20, 22) of the receiving parts (12, 14) in order, on relative rotation of the receiving parts (12 14) about the common axis of rotation (X), to wind the line portion (2a) of the at least one line (2) to be guided from the receiving groove (20, 22) of the one receiving part (12, 14) into the receiving groove (20, 22) of the other receiving part (12, 14).

2. The rotary guide (1) according to Claim 1, **characterized in that**
- the deflection unit (16) is arranged rotatably between the receiving parts (12, 14) and one of the two receiving parts (12, 14) is mounted in relatively rotatable manner on the other receiving part (12, 14) by means of the deflection unit (16); and/or **in that**
- the deflection unit (16) has a deflection guide (28a, 28b) which preferably comprises at least one part of the active area (33).

3. The rotary guide (1) according to claim 1 or 2, **characterized in that** the deflection unit (16) is of dished construction, with two in particular substantially flat sides (25, 27), wherein each of the sides (25, 27) respectively faces a receiving groove (20, 22) of one of the receiving parts (12, 14), and preferably terminates flush with a corresponding mating face of the receiving part (12, 14), in order to cover and/or axially delimit the receiving groove (20, 22).

4. The rotary guide (1) according to Claim 2 or 3, **characterized in that** the deflection guide is formed by boundary faces (28a, 28b; 48a, 48b) of a guide slot (28, 48) in the deflection unit (16) with a radial and axial extent.

5. The rotary guide (1) according to Claim 4, **characterized in that** a first boundary face (28a; 48a) of the guide slot (28; 48) is configured as a convex surface of a half-cylinder with a cylinder axis extending perpendicular, in particular radially, relative to the axis of rotation (X), wherein the second boundary face (28b; 48b) of the guide slot (28; 48) facing the first boundary face (28a; 48a) in a circumferential direction extends, in a section plane perpendicular to the axis of rotation (X), parallel to the first boundary face (28a; 48a), and is preferably configured as a concave surface, in particular configured to fit with the semi-cylindrical convex surface, wherein the first boundary face (28a; 48a) preferably forms a part of the active area (33)and wherein most preferably the flat sides (25, 27) of the deflection unit (16) form a further part of the active area (33).

6. The rotary guide (1) according to one of the preceding claims, **characterized in that** the radius of curvature at the innermost end region of the turns (24, 26) of the receiving groove (20, 22) is greater than or equal to the minimum just permissible radius of the deflection region (18) of the line (2) to be guided.

7. The rotary guide (1) according to one of the preceding claims, **characterized in that** the axial extent of the deflection unit (16) is greater than or equal to twice the minimum just permissible radius of the deflection region (18) of the line (2) to be guided and the receiving parts (12, 14) have a smaller axial extent than the deflection unit (16).

8. The rotary guide (1) according to one of the preceding claims, **characterized in that** each of the receiving parts (12, 14) is of dished construction, with two major sides (21, 21a, 23, 23a), wherein the receiving groove (20, 22) is open to one of the major sides (21, 23), and this major side (21, 23) preferably terminates flat.

9. The rotary guide (1) according to one of the preceding claims, **characterized in that** the axial play between the receiving parts (12, 14) and the deflection unit (16) is adjustable, preferably continuously adjustable.

10. The rotary guide (1) according to one of the preceding claims, **characterized in that** the depth of the receiving groove (20, 22) is adapted to the diameter of a line (2) to be guided.

11. The rotary guide (1) according to one of the preceding claims, **characterized in that** turns (24, 26) of the two receiving grooves (20, 22) run in a planar spiral, in particular an Archimedean spiral.

12. The rotary guide (1) according to one of the preceding claims, **characterized in that** at least one receiving part (12, 14) has a feedthrough opening (7) to the innermost turn and preferably further **characterized in that** the feedthrough opening takes the form of a radial slot (51) from one edge of a narrow side (17, 19) of the receiving part (12, 14) to the innermost turn.

13. The rotary guide (1) according to one of the preceding claims, **characterized in that**
- the receiving parts (12, 14) are standard parts; and/or **in that**
- the rotary guide (1) consists of the receiving parts (12, 14) and the deflection unit (16).

14. The rotary guide (1) according to one of the preceding claims, **characterized in that** the receiving parts (12, 14) and the deflection unit (16) are made from plastics material, in particular by injection molding.

15. The rotary guide (1) according to one of the preceding claims, **characterized in that** a plurality of lines are received in a three-dimensionally deflectable line guide device and/or in a flexible envelope or the like, which is in turn arranged in the rotary guide.

## Revendications

1. Guide rotatif (1) pour un guidage sans interruption d'au moins une conduite (2) entre deux points rotatifs l'un par rapport à l'autre (3, 4), le guide rotatif (1) comprenant :
deux parties de réception (12, 14), positionnées rotatives l'une par rapport à l'autre autour d'un axe de rotation commun (X), pour loger respectivement une de deux sections partielles (29, 31) qui doivent être enroulées en sens contraire autour de l'axe de rotation commun (X) d'une section de conduite (2a) qui peut être logée dans le guide rotatif (1)
et une unité de renvoi (16) pour supporter une zone de renvoi (18) dans laquelle la section de conduite (2a) de la conduite à guider (2) peut être retournée entre les sections partielles (29, 31) qui doivent être enroulées en sens contraire si bien que la au moins une conduite à guider (2) est renvoyée par une partie de réception (12, 14) dans l'autre partie de réception (12, 14) lors d'une rotation relative des parties de réception (12, 14) autour de l'axe de rotation commun (X), **caractérisé en ce**
**que** chacune des parties de réception (12, 14) présente une rainure de réception en forme de spirale (20, 22) avec une multitude d'enroulements (24, 26) autour de l'axe de rotation commun (X) et qui s'étendent d'un rayon de début (rₐ) à un rayon de fin (rₑ) pour recevoir une section de conduite (2a) au moins partiellement dans la rainure de réception (20, 22) de chaque partie de réception (12, 14) respectivement dans un plan prédéfini par la partie de réception (12, 14) perpendiculairement à l'axe de rotation commun (X) et
**que** l'unité de renvoi (16) présente au moins une surface active (33) qui est étendue radialement ou qui est réglable radialement entre le rayon de début (rₐ) et le rayon de fin (rₑ) qui coopère avec les rainures de réception (20, 22) des parties de réception (!2, 14) pour enrouler, lors d'une rotation relative des parties de réception (12, 14) autour de l'axe de rotation commun (X), la section de conduite (2a) de la au moins une conduite à guider (2) hors de la rainure de réception (20, 22) de l'une des parties de réception (12, 14) dans la rainure de réception (20, 22) de l'autre partie de réception (12, 14).

2. Guide rotatif (1) selon la revendication 1, **caractérisé en ce que**
- l'unité de renvoi (16) est placée rotative entre les parties de réception (12, 14) de telle manière qu'une des deux parties de réception (12, 14) est positionnée à l'aide de l'unité de renvoi (16) en rotation relative sur l'autre partie de réception (12, 14) et/ou
- que l'unité de renvoi (16) présente un guidage de renvoi (28a, 28b) qui comprend de préférence au moins une partie de la surface active (33).

3. Guide rotatif (1) selon la revendication 1 ou 2, **caractérisé en ce que** l'unité de renvoi (16) est réalisée de type plateau avec deux côtés en particulier substantiellement plans (25, 27), cependant que chacun des côtés (25, 27) de respectivement une rainure de réception (20, 22) est tourné respectivement vers l'une des parties de réception (12, 14) et se termine de préférence en affleurant avec une surface antagoniste correspondante des parties de réception (12, 14) pour couvrir et/ou limiter axialement la rainure de réception (20, 22).

4. Guide rotatif (1) selon la revendication 2 ou 3, **caractérisé en ce que** le guidage de renvoi est configuré par des surfaces limites (28a, 28b ; 48a, 48b) d'une fente de guidage (28, 48) dans l'unité de renvoi (16) avec une extension radiale et une extension axiale.

5. Guide rotatif (1) selon la revendication 4, **caractérisé en ce qu'**une première surface limite (28a ; 48a) de la fente de guidage (28 ; 48) est configurée comme surface limite convexe d'un demi cylindre avec un axe de cylindre qui s'étend perpendiculairement, en particulier radialement, par rapport à l'axe de rotation (X), cependant que la seconde surface limite (28b ; 48b) de la fente de guidage (28 ; 48), opposée dans une direction circonférentielle de la première surface limite (28a ; 48a), s'étend dans un plan de coupe perpendiculairement à l'axe de rotation (X) parallèlement à la première surface limite (28a ; 48a), et de préférence comme surface concave, en particulier conjuguée à la surface convexe semi-cylindrique, cependant que la première surface limite (28a ; 48a) forme de préférence une partie de la surface active (33) et cependant que de manière particulièrement préférée les côtés plans (25, 27) de l'unité de renvoi (16) forment une autre partie de la surface active (33).

6. Guide rotatif (1) selon l'une des revendications précédentes, **caractérisé en ce que** le rayon de courbure dans la zone terminale la plus à l'intérieur des enroulements (24, 26) de la rainure de réception (20, 22) est supérieur ou égal au rayon minimal encore admissible de la zone de renvoi (18) de la conduite à guider (2).

7. Guide rotatif (1) selon l'une des revendications précédentes, **caractérisé en ce que** l'extension axiale de l'unité de renvoi (16) est supérieure ou égale au double du rayon minimal encore admissible de la zone de renvoi (18) de la conduite à guider (2) et que les parties de réception (12, 14) présentent une extension axiale plus faible que l'unité de renvoi (16).

8. Guide rotatif (1) selon l'une des revendications précédentes, **caractérisé en ce que** chacune des parties de réception (12, 14) est réalisée de type plateau avec deux côtés principaux (21, 21a, 23, 23a), cependant que la rainure de réception (20, 22) est ouverte vers l'un des côtés principaux (21, 23) et termine ce côté principal (21, 23) de préférence à plat.

9. Guide rotatif (1) selon l'une des revendications précédentes, **caractérisé en ce que** le jeu axial entre les parties de réception (12, 14) et l'unité de renvoi (16) est réglable, de préférence réglable en continu.

10. Guide rotatif (1) selon l'une des revendications précédentes, **caractérisé en ce que** la profondeur de la rainure de réception (20, 22) est adaptée au diamètre d'une conduite à guider (2).

11. Guide rotatif (1) selon l'une des revendications précédentes, **caractérisé en ce que** des enroulements (24, 26) des deux rainures de réception (20, 22) s'étendent conformément à une spirale plane, en particulier conformément à une spirale d'Archimède.

12. Guide rotatif (1) selon l'une des revendications précédentes, **caractérisé en ce qu'**au moins une partie de réception (12, 14) présente une ouverture de passage (7) vers l'enroulement le plus à l'intérieur et de préférence de plus **caractérisé en ce que** l'ouverture de passage est réalisée comme une fente radiale (51) d'un bord d'un petit côté (17, 19) de la partie de réception (12, 14) à l'enroulement le plus à l'intérieur.

13. Guide rotatif (1) selon l'une des revendications précédentes, **caractérisé en ce**
- **que** les parties de réception (12, 14) sont des pièces identiques et/ou
- **que** le guide rotatif (1) est constitué par les parties de réception (12, 14) et l'unité de renvoi (16).

14. Guide rotatif (1) selon l'une des revendications précédentes, **caractérisé en ce que** les parties de réception (12, 14) et l'unité de renvoi (16) sont fabriquées en matière plastique, en particulier par moulage par injection.

15. Guide rotatif (1) selon l'une des revendications précédentes, **caractérisé en ce que** plusieurs conduites sont logées dans un dispositif de guidage de conduite pouvant être déployée dans l'espace et/ou dans une gaine souple ou équivalent qui est à son tour placée dans le guide rotatif.
